# EUROPEAN PATENT SPECIFICATION

(11) **EP 3 816 537 B1**
(45) Date of publication and mention of the grant of the patent: **16.08.2023**
(21) Application number: 18923832.2
(22) Date of filing: 29.06.2018
(51) Int. Cl.: F25B 1/00, F25B 43/00, F25B 13/00, F25B 40/00, F25B 41/30, F25B 49/02, F25B 41/42

(54) **REFRIGERATION CYCLE DEVICE**
KÄLTEKREISLAUFVORRICHTUNG
DISPOSITIF À CYCLE FRIGORIFIQUE

(43) Date of publication of application: 05.05.2021
(60) Divisional application: 21216933.8
(73) Proprietor: Mitsubishi Electric Corporation, Tokyo 100-8310 (JP)
(72) Inventor: NISHIYAMA, Takumi, Tokyo 1008310 (JP)
(74) Representative: Pfenning, Meinig & Partner mbB
(86) International application number: PCT/JP2018/024812
(87) International publication number: WO 2020/003494

(56) References cited:
- EP-A1- 3 144 534
- WO-A1-2015/140874
- WO-A1-2016/181529
- JP-A- 2002 243 295
- JP-A- 2002 243 295
- JP-A- 2018 048 271
- JP-A- 2018 048 271
- US-A1- 2017 284 712
- US-A1- 2017 321 099

## Description

### TECHNICAL FIELD

The present invention relates to a refrigeration cycle apparatus in which a non-azeotropic refrigerant mixture is used.

### BACKGROUND ART

A refrigeration cycle apparatus in which a non-azeotropic refrigerant mixture is used has conventionally been known. For example, WO2015/140884 (PTL 1) discloses a refrigeration cycle apparatus in which a non-azeotropic refrigerant mixture is used that includes: first refrigerant having a characteristic causing a disproportionation reaction (self-decomposition reaction); and second refrigerant that is higher in boiling point than the first refrigerant under the same pressure. In the refrigeration cycle apparatus, in the initial state after a compressor is started, the temperature or the pressure of the refrigerant discharged from the compressor based on the amount of liquid refrigerant inside a gas-liquid separator is suppressed as compared with the case in a normal operation. Thereby, since the disproportionation reaction of the first refrigerant can be prevented, the performance of the refrigeration cycle apparatus can be improved. JP 2018 048271 A discloses a refrigerant mixture consisting of R1123 and either of saturated hydrocarbon (for example propane) or CF3I as a disproportionation inhibitor, and R32 as a refrigerant component. The total amount of CFI3 is equal to or less than 10 mass % of the total amount of the refrigerant regardless of the relationship between the weight ratio of CFI3 and R32.

### CITATION LIST

### PATENT LITERATURE

PTL 1: WO2015/140884

### SUMMARY OF INVENTION

### TECHNICAL PROBLEM

A non-azeotropic refrigerant mixture obtained by mixing refrigerant containing a single component with another refrigerant having a lower global warming potential (GWP) may be used in a refrigeration cycle apparatus from the viewpoint of prevention of global warming. In a non-azeotropic refrigerant mixture, a temperature gradient may occur between the temperature of a saturated liquid and the temperature of saturated vapor at the same pressure. As the temperature gradient increases, the temperature of the non-azeotropic refrigerant mixture flowing into a heat exchanger functioning as an evaporator decreases, so that frost is more likely to be formed. As a result, the performance of the refrigeration cycle apparatus may deteriorate.

The present invention has been made in order to solve the above-described problems. An object of the present invention is to suppress the performance deterioration of a refrigeration cycle apparatus, in which a non-azeotropic refrigerant mixture is used, while reducing the GWP of the non-azeotropic refrigerant mixture.

### SOLUTION TO PROBLEM

In a refrigeration cycle apparatus according to the present invention, a non-azeotropic refrigerant mixture is used. The refrigeration cycle apparatus according to the present invention is defined in claim 1, and includes a compressor, a first heat exchanger, a first expansion valve, and a second heat exchanger. The non-azeotropic refrigerant mixture circulates in a first circulation direction through the compressor, the first heat exchanger, the first expansion valve, and the second heat exchanger. The non-azeotropic refrigerant mixture includes R32, CF3I, and R1123. A first weight ratio of the R32 in the non-azeotropic refrigerant mixture sealed in the refrigeration cycle apparatus is equal to or less than 43 wt%. A second weight ratio of the CF3I in the non-azeotropic refrigerant mixture sealed in the refrigeration cycle apparatus is equal to or less than the first weight ratio. A third weight ratio of the R1123 in the non-azeotropic refrigerant mixture sealed in the refrigeration cycle apparatus is equal to or greater than 14 wt%.

### ADVANTAGEOUS EFFECTS OF INVENTION

According to the refrigeration cycle apparatus of the present invention, in the non-azeotropic refrigerant mixture sealed in the refrigeration cycle apparatus, the first weight ratio of R32 is equal to or less than 43 wt%, the second weight ratio of CF3I is equal to or less than the first weight ratio, and the third weight ratio of R1123 is equal to or greater than 14 wt%. Thereby, the performance deterioration of the refrigeration cycle apparatus in which a non-azeotropic refrigerant mixture is used can be suppressed while reducing the GWP of the non-azeotropic refrigerant mixture.

### BRIEF DESCRIPTION OF DRAWINGS

Fig. 1 is a functional block diagram showing a configuration of a refrigeration cycle apparatus according to the first embodiment.
Fig. 2 is a P-h diagram showing the relation among enthalpy, pressure, and a temperature of a commonly-used non-azeotropic refrigerant mixture.
Fig. 3 is a diagram showing the relation between a temperature gradient and a ratio of a weight ratio of R32 to a weight ratio of CF3I.
Fig. 4 is a flowchart for illustrating a process performed by a controller in Fig. 1 for decreasing a discharge temperature.
Fig. 5 is a functional block diagram showing a configuration of a refrigeration cycle apparatus according to the first modification of the first embodiment.
Fig. 6 is a functional block diagram showing a configuration of a refrigeration cycle apparatus according to the second modification of the first embodiment.
Fig. 7 is a simulation result obtained when a weight ratio of R1123 is changed in a range of 14 wt% or more and 57 wt% or less in the state where the weight ratio of R32 in a non-azeotropic refrigerant mixture is set at 43 wt%.
Fig. 8 is a simulation result obtained when the weight ratio of R1123 is changed in a range of 40 wt% or more and 70 wt% or less in the state where the weight ratio of R32 in the non-azeotropic refrigerant mixture is set at 30 wt%.
Fig. 9 is a functional block diagram showing a configuration of a refrigeration cycle apparatus according to the second embodiment together with a flow of refrigerant in a cooling operation.
Fig. 10 is a P-h diagram showing a change of the state of the non-azeotropic refrigerant mixture in the cooling operation.
Fig. 11 is a functional block diagram showing the configuration of the refrigeration cycle apparatus according to the second embodiment together with a flow of refrigerant in a heating operation.
Fig. 12 is a P-h diagram showing a change of the state of the non-azeotropic refrigerant mixture in the heating operation.
Fig. 13 is an example of a flowchart for illustrating control of a third expansion valve performed by a controller in Figs. 9 and 11.
Fig. 14 is another example of the flowchart for illustrating control of the third expansion valve performed by the controller in Figs. 9 and 11.
Fig. 15 is a functional block diagram showing a configuration of a refrigeration cycle apparatus according to the first modification of the second embodiment.
Fig. 16 is a functional block diagram showing a configuration of a refrigeration cycle apparatus according to the second modification of the second embodiment.
Fig. 17 is a P-h diagram showing a change of the state of the non-azeotropic refrigerant mixture in the cooling operation.
Fig. 18 is a P-h diagram showing a change of the state of the non-azeotropic refrigerant mixture in the heating operation.
Fig. 19 is a flowchart for illustrating control of a third expansion valve performed by a controller in Fig. 16.
Fig. 20 is a functional block diagram showing a configuration of a refrigeration cycle apparatus according to the third modification of the second embodiment.
Fig. 21 is a functional block diagram showing a configuration of a refrigeration cycle apparatus according to the fourth modification of the second embodiment.

### DESCRIPTION OF EMBODIMENTS

Embodiments of the present invention will be hereinafter described in detail with reference to the accompanying drawings, in which the same or corresponding components will be denoted by the same reference characters, and the description thereof will not be basically repeated.

### First Embodiment

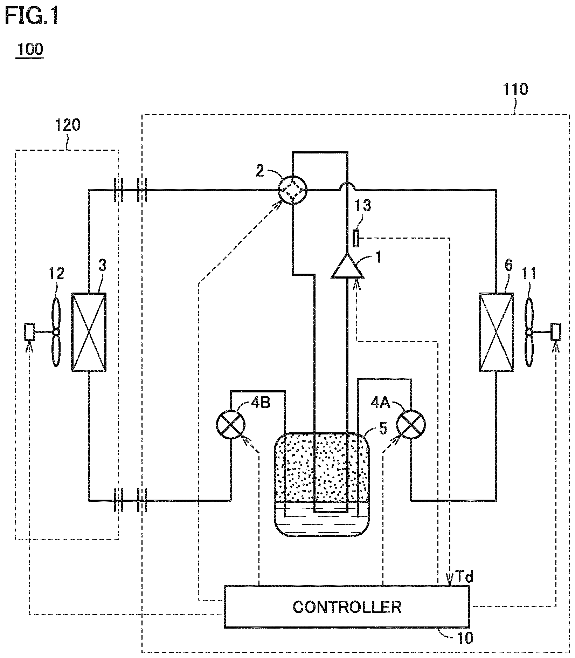

Fig. 1 is a functional block diagram showing a configuration of a refrigeration cycle apparatus 100 according to the first embodiment. Refrigeration cycle apparatus 100 may be a package air conditioner (PAC), for example. As shown in Fig. 1, refrigeration cycle apparatus 100 includes an outdoor unit 110 and an indoor unit 120. Outdoor unit 110 includes a compressor 1, a four-way valve 2 (a flow path switching valve), an expansion valve 4A (a first expansion valve), an expansion valve 4B (a second expansion valve), a receiver 5 (a refrigerant container), a heat exchanger 6 (a first heat exchanger), an outdoor fan 11, a controller 10, and a temperature sensor 13. Indoor unit 120 includes a heat exchanger 3 (a second heat exchanger) and an indoor fan 12.

In refrigeration cycle apparatus 100, a non-azeotropic refrigerant mixture is used that is reduced in GWP by mixing R32, CF3I, and R1123 into this non-azeotropic refrigerant mixture. The weight ratio of R32 in the non-azeotropic refrigerant mixture sealed in refrigeration cycle apparatus 100 is equal to or less than 43 wt%. The weight ratio of CF3I in the non-azeotropic refrigerant mixture sealed in refrigeration cycle apparatus 100 is equal to or less than the weight ratio of R32. The weight ratio of R1123 in the non-azeotropic refrigerant mixture sealed in refrigeration cycle apparatus 100 is equal to or greater than 14 wt%. Even in the case where the amount of used non-azeotropic refrigerant mixture increases with an increase in number of shipments of refrigeration cycle apparatus 100, it is desirable to further decrease the GWP in the state where the weight ratio of R32 is set at 30 wt% or less, so as to comply with the regulations for refrigerant (for example, the Montreal Protocol or the F-gas regulations).

The boiling points of R32, CF3I, and R1123 are -52°C, -22.5°C, and -56°C, respectively. R1123 raises the operating pressure of the non-azeotropic refrigerant mixture. R1123 is contained in the non-azeotropic refrigerant mixture to thereby allow reduction of the volume (stroke volume) of compressor 1 that is required for ensuring desired operating pressure, with the result that compressor 1 can be reduced in size. In addition, in the range in which reduction of the GWP is not prevented, the non-azeotropic refrigerant mixture may include refrigerant other than R32, CF3I, and R1123 (for example, R1234yf, R1234ze(E), R290, or CO2).

Controller 10 controls the driving frequency of compressor 1 to thereby control the amount of refrigerant discharged from compressor 1 per unit time such that the temperature inside indoor unit 120 measured by a temperature sensor (not shown) reaches a desired temperature (for example, the temperature set by a user). Controller 10 controls the degrees of opening of expansion valves 4A and 4B such that the degree of superheating or the degree of supercooling of the non-azeotropic refrigerant mixture attains a value in a desired range. Controller 10 controls the amount of air blown from outdoor fan 11 and indoor fan 12 per unit time. From temperature sensor 13, controller 10 obtains a discharge temperature Td (the first temperature) of the non-azeotropic refrigerant mixture discharged from compressor 1. Controller 10 controls four-way valve 2 to switch the direction in which the non-azeotropic refrigerant mixture circulates.

Controller 10 controls four-way valve 2 to allow, in the cooling operation, communication between a discharge port of compressor 1 and heat exchanger 6 and communication between heat exchanger 3 and a suction port of compressor 1. In the cooling operation, the non-azeotropic refrigerant mixture circulates through compressor 1, four-way valve 2, heat exchanger 6, expansion valve 4A, receiver 5, expansion valve 4B, heat exchanger 3, four-way valve 2, and receiver 5 in this order. A part of the non-azeotropic refrigerant mixture having flowed through expansion valve 4A into receiver 5 is separated into a non-azeotropic refrigerant mixture in a liquid state and a non-azeotropic refrigerant mixture in a gas state, and then, stored in receiver 5.

Controller 10 controls four-way valve 2 to allow, in the heating operation, communication between the discharge port of compressor 1 and heat exchanger 3 and communication between heat exchanger 6 and the suction port of compressor 1. In the heating operation, the non-azeotropic refrigerant mixture circulates through compressor 1, four-way valve 2, heat exchanger 3, expansion valve 4B, receiver 5, expansion valve 4A, heat exchanger 6, four-way valve 2, and receiver 5 in this order. A part of the non-azeotropic refrigerant mixture having flowed through expansion valve 4B into receiver 5 is separated into a non-azeotropic refrigerant mixture in a liquid state and a non-azeotropic refrigerant mixture in a gas state, and then, stored in receiver 5.

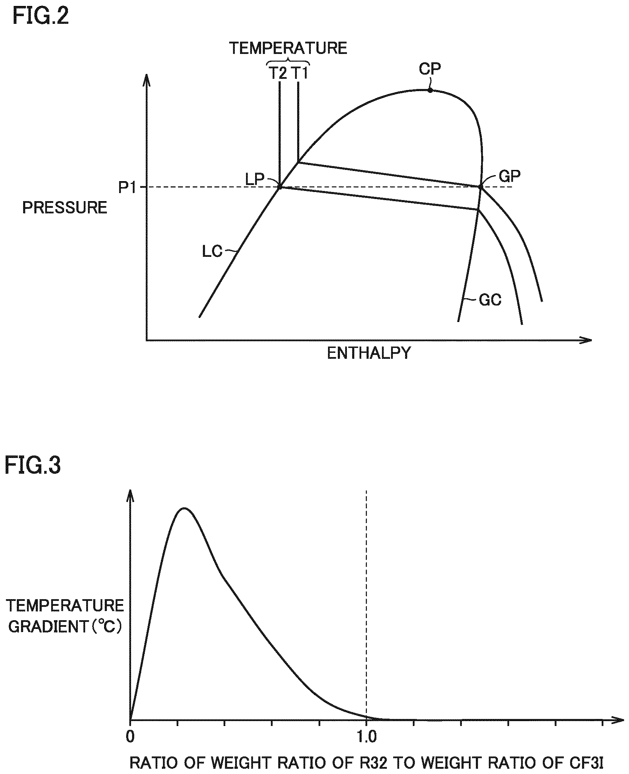

Fig. 2 is a P-h diagram showing the relation among enthalpy, pressure, and a temperature of a commonly-used non-azeotropic refrigerant mixture. In Fig. 2, curved lines LC and GC show a saturated liquid line and a saturated vapor line, respectively. The saturated liquid line and the saturated vapor line are connected to each other at a critical point CP. Points LP and GP on saturated liquid line LC indicate a point on the saturated liquid line and a point on the saturated vapor line, respectively, at pressure P1. Fig. 2 shows isotherms of temperatures T1 and T2 (< T1).

As shown in Fig. 2, a temperature gradient of T1 - T2 occurs between points GP and LP. The non-azeotropic refrigerant mixture may have a characteristic that the temperature decreases as the enthalpy decreases in a gas-liquid two-phase state (a region between saturated liquid line LC and saturated vapor line GC) under the same pressure. As the temperature gradient becomes larger, the temperature of the non-azeotropic refrigerant mixture flowing into heat exchanger 6 functioning as an evaporator in the heating operation becomes lower. Thus, frost is more likely to be formed on heat exchanger 6. As a result, the performance of refrigeration cycle apparatus 100 may deteriorate.

Accordingly, in refrigeration cycle apparatus 100, the non-azeotropic refrigerant mixture sealed in refrigeration cycle apparatus 100 is prepared such that the weight ratio of CF3I is equal to or less than the weight ratio of R32, thereby suppressing the temperature gradient.

Fig. 3 is a diagram showing the relation between the temperature gradient and the ratio of the weight ratio of R32 to the weight ratio of CF3I. As shown in Fig. 3, the weight ratio of CF3I is set to be equal to or less than the weight ratio of R32 (the ratio of the weight ratio of R32 to the weight ratio of CF3I is equal to or greater than 1.0), and thereby, the temperature gradient can be suppressed.

It is known that CF3I included in the non-azeotropic refrigerant mixture used in refrigeration cycle apparatus 100 is fluorinated or iodinated in a high temperature (for example, about 100°C) environment. When CF3I is fluorinated or iodinated, metal corrosion of a pipe causes impurities (sludge) in refrigeration cycle apparatus 100, which increases the possibility that a failure may occur in refrigeration cycle apparatus 100. Thus, in refrigeration cycle apparatus 100, in order to prevent fluorination and iodination of CF3I, discharge temperature Td of the non-azeotropic refrigerant mixture discharged from compressor 1 is controlled to be decreased when discharge temperature Td is equal to or higher than a reference temperature (for example, 100°C). As a result, the safety of refrigeration cycle apparatus 100 can be improved.

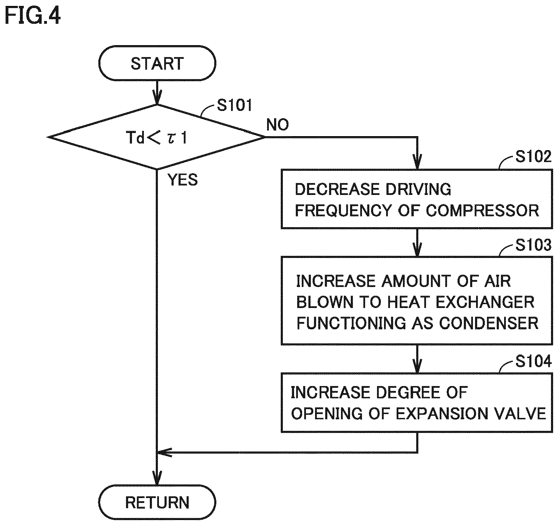

Fig. 4 is a flowchart for illustrating a process performed by controller 10 in Fig. 1 for decreasing discharge temperature Td. The process shown in Fig. 4 is invoked at prescribed time intervals by a main routine (not shown) for performing integrated control of refrigeration cycle apparatus 100. In the following, a step will be simply abbreviated as S.

As shown in Fig. 4, in S101, controller 10 determines whether discharge temperature Td is less than a reference temperature τ1 or not. When discharge temperature Td is less than reference temperature τ1 (YES in S101), controller 10 returns the process to the main routine. When discharge temperature Td is equal to or greater than reference temperature τ1 (NO in S101), controller 10 proceeds the process to S102.

In S102, controller 10 decreases the driving frequency of compressor 1, and then, proceeds the process to S103. In 103, controller 10 increases the amount of air blown to the heat exchanger functioning as a condenser, and then, proceeds the process to S104. In the cooling operation, in S103, controller 10 increases the amount of air blown from outdoor fan 11 per unit time. In the heating operation, in S103, controller 10 increases the amount of air blown from indoor fan 12. In S104, controller 10 increases the degrees of opening of expansion valves 4A and 4B, and then, returns the process to the main routine.

It should be noted that at least one of S102 to S104 may be performed but all of S102 to S104 do not necessarily have to be performed. Also, S102 to S104 do not necessarily have to be performed in the order shown in Fig. 4.

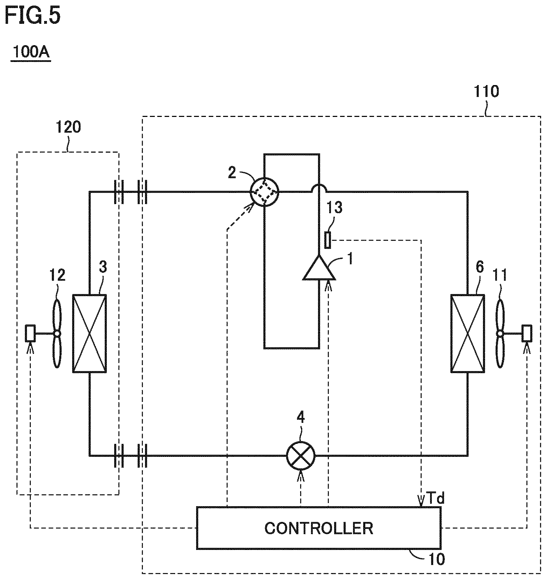

The first embodiment has been described with regard to the refrigeration cycle apparatus including a refrigerant container in which a non-azeotropic refrigerant mixture is stored. The refrigeration cycle apparatus according to the first embodiment does not necessarily have to include a refrigerant container, for example, as with a refrigeration cycle apparatus 100A according to the first modification of the first embodiment shown in Fig. 5. Refrigeration cycle apparatus 100A has the same configuration as that of refrigeration cycle apparatus 100 in Fig. 1 except that: receiver 5 is removed from refrigeration cycle apparatus 100 in Fig. 1; and expansion valves 4A and 4B are replaced with expansion valve 4 (the first expansion valve). Refrigeration cycle apparatus 100A may be a room air conditioner (RAC), for example.

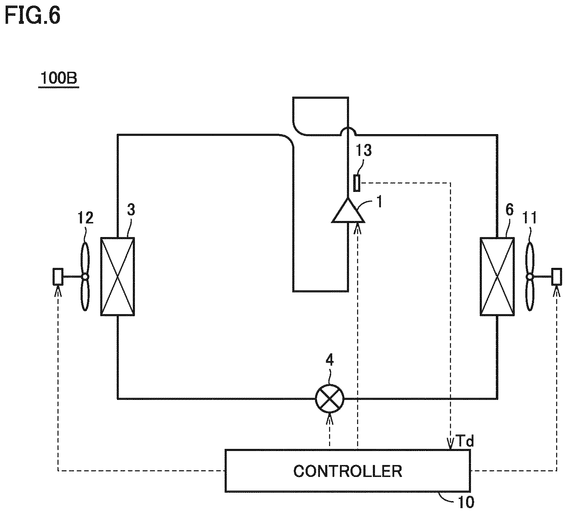

The first embodiment and the first modification have been described with regard to the case where a flow path switching valve switches the circulation direction of the refrigerant. The refrigeration cycle apparatus according to the first embodiment does not have to include a flow path switching valve, for example, as with a refrigeration cycle apparatus 100B according to the second modification of the first embodiment shown in Fig. 6. Refrigeration cycle apparatus 100B may be a refrigerator or a showcase, for example.

The first embodiment and the first modification have been described with regard to the refrigeration cycle apparatus including one outdoor unit and one indoor unit. The refrigeration cycle apparatus according to the present embodiment may include a plurality of outdoor units or may include a plurality of indoor units.

As described above, according to the refrigeration cycle apparatus in the first embodiment and the first and second modifications, the performance deterioration of the refrigeration cycle apparatus in which a non-azeotropic refrigerant mixture is used can be suppressed while reducing the GWP of the non-azeotropic refrigerant mixture. Furthermore, according to the refrigeration cycle apparatus in the first embodiment and the first and second modifications, the safety of refrigeration cycle apparatus 100 can be improved.

### Second Embodiment

The first embodiment has been described with regard to the refrigeration cycle apparatus in which a non-azeotropic refrigerant mixture including R32, CF3I, and R1123 is used. Among R32, CF3I, and R1123, R1123 having the lowest boiling point readily evaporates. Thus, as the refrigeration cycle apparatus continues to operate, the weight ratio of R1123 contained in the refrigerant container increases. This consequently decreases the weight ratio of R1123 in the non-azeotropic refrigerant mixture (the circulating refrigerant) circulating through the refrigeration cycle apparatus.

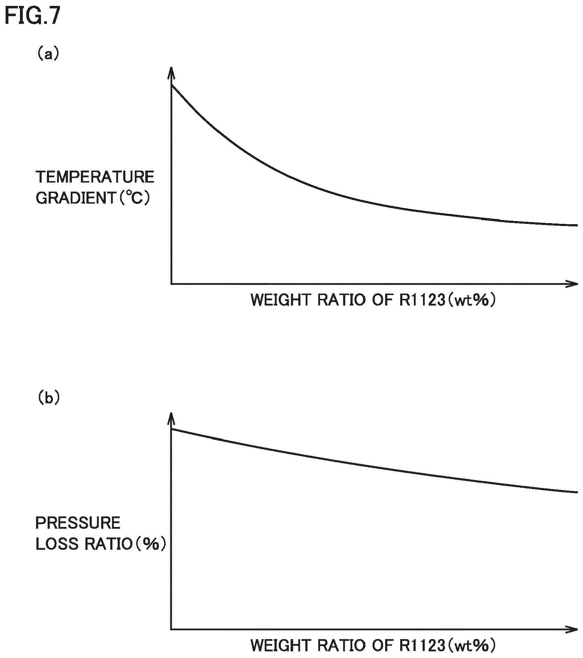

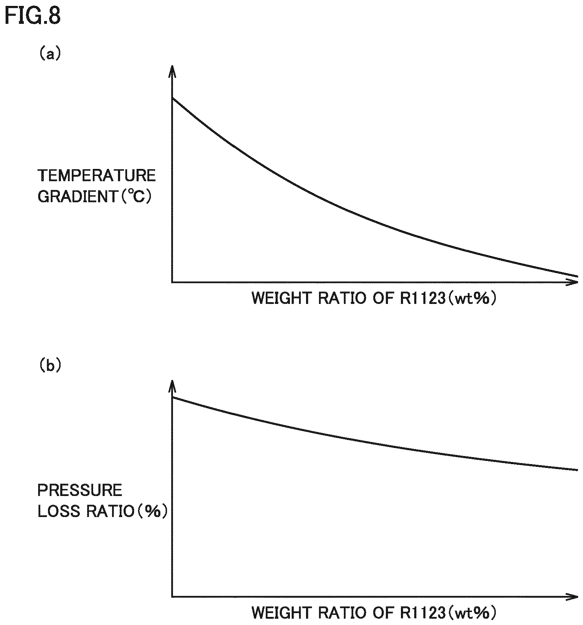

Each of Figs. 7 and 8 shows (a) a simulation result of the relation between the temperature gradient and the weight ratio of R1123 in the non-azeotropic refrigerant mixture and (b) a simulation result of the relation between this weight ratio and the pressure loss ratio. Fig. 7 is a simulation result obtained when the weight ratio of R1123 is changed in a range of 14 wt% or more and 57 wt% or less in the state where the weight ratio of R32 in the non-azeotropic refrigerant mixture is set at 43 wt%. Fig. 8 is a simulation result obtained when the weight ratio of R1123 is changed in a range of 40 wt% or more and 70 wt% or less in the state where the weight ratio of R32 in the non-azeotropic refrigerant mixture is set at 30 wt%. The pressure loss ratio means a ratio of the pressure loss with the weight ratio of R1123 having a certain value to the pressure loss with the minimum weight ratio of R1123.

As shown in Figs. 7(a) and 8(a), as the weight ratio of R1123 increases, the temperature gradient decreases. As shown in Figs. 7(b) and 8(b), as the weight ratio of R1123 increases, the pressure loss ratio decreases.

Thus, in the second embodiment, when the temperature gradient exceeds a threshold value, R1123 in the refrigerant container is returned to the circulating refrigerant, to thereby suppress an increase in temperature gradient and an increase in pressure loss ratio. This can consequently suppress the performance deterioration of the refrigeration cycle apparatus caused by a decrease in weight ratio of R1123 in the circulating refrigerant.

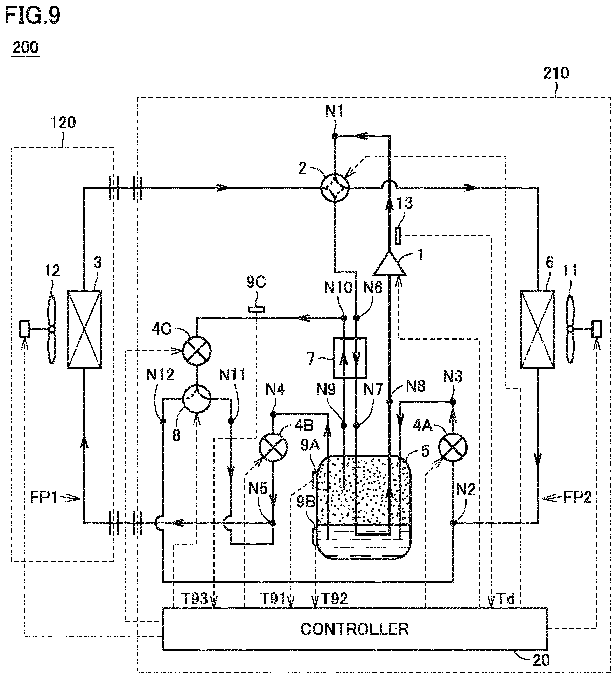

Fig. 9 is a functional block diagram showing the configuration of a refrigeration cycle apparatus 200 according to the second embodiment together with a flow of refrigerant in the cooling operation. Refrigeration cycle apparatus 200 has the same configuration as that of refrigeration cycle apparatus 100 in Fig. 1 except that outdoor unit 110 of refrigeration cycle apparatus 100 in Fig. 1 is replaced with an outdoor unit 210. Outdoor unit 210 has the same configuration as that of outdoor unit 110 in Fig. 1 except that: an expansion valve 4C (a third expansion valve), a three-way valve 8 (a flow path switching portion), an internal heat exchanger 7 (a third heat exchanger), and temperature sensors 9A to 9C are additionally included; and controller 10 in Fig. 1 is replaced with a controller 20. Since the configuration other than the above is the same, the description thereof will not be repeated.

As shown in Fig. 9, internal heat exchanger 7 is connected between receiver 5 and expansion valve 4C and connected between four-way valve 2 and receiver 5. Three-way valve 8 is connected between expansion valve 4C and a flow path FP1 (the first flow path) that connects heat exchanger 3 and expansion valve 4B. Furthermore, three-way valve 8 is connected between expansion valve 4C and a flow path FP2 (the second flow path) that connects expansion valve 4A and heat exchanger 6. The cooling operation of refrigeration cycle apparatus 200 is started in the state where expansion valve 4C is closed. Internal heat exchanger 7 may be connected at any position as long as internal heat exchanger 7 is connected at a position through which the non-azeotropic refrigerant mixture flowing between four-way valve 2 and the suction port of compressor 1 passes. For example, internal heat exchanger 7 may be connected between receiver 5 and expansion valve 4C and also may be connected between receiver 5 and the suction port of compressor 1.

Controller 20 controls the driving frequency of compressor 1 to thereby control the amount of refrigerant discharged by compressor 1 per unit time such that the temperature inside indoor unit 120 reaches a desired temperature. Controller 20 controls the degrees of opening of expansion valves 4A and 4B such that the degree of superheating or the degree of supercooling of the non-azeotropic refrigerant mixture attains a value in a desired range. Controller 20 controls the amount of air blown from each of outdoor fan 11 and indoor fan 12 per unit time.

From temperature sensor 13, controller 20 obtains discharge temperature Td (the first temperature) of the non-azeotropic refrigerant mixture discharged from compressor 1. From temperature sensor 9A, controller 20 obtains a temperature T91 (the second temperature) of the non-azeotropic refrigerant mixture in a gas state inside receiver 5. From temperature sensor 9B, controller 20 obtains a temperature T92 (the third temperature) of the non-azeotropic refrigerant mixture in a liquid state inside receiver 5. From temperature sensor 9C, controller 20 obtains a temperature T93 (the fourth temperature) of the non-azeotropic refrigerant mixture flowing between internal heat exchanger 7 and expansion valve 4C.

In addition, Fig. 9 shows the case where temperature sensors 9A and 9B are disposed on the side surface of receiver 5, but temperature sensors 9A and 9B do not necessarily have to be disposed only on the side surface of receiver 5. As long as temperature sensor 9A can measure the temperature of the non-azeotropic refrigerant mixture in a gas state inside receiver 5, this temperature sensor 9A may be disposed at any position and, for example, may be disposed on a ceiling portion or an upper surface of receiver 5. Furthermore, as long as temperature sensor 9B can measure the temperature of the non-azeotropic refrigerant mixture in a liquid state inside receiver 5, this temperature sensor 9B may be disposed at any position and, for example, may be disposed on a bottom portion or a bottom surface of receiver 5.

In the cooling operation, controller 20 controls four-way valve 2 to allow communication between the discharge port of compressor 1 and heat exchanger 6 and communication between heat exchanger 3 and internal heat exchanger 7. Controller 20 controls three-way valve 8 to allow expansion valve 4C to communicate with flow path FP1.

In the cooling operation, the non-azeotropic refrigerant mixture circulates through compressor 1, four-way valve 2, heat exchanger 6, expansion valve 4A, receiver 5, expansion valve 4B, heat exchanger 3, four-way valve 2, internal heat exchanger 7, and receiver 5 in this order. A part of the non-azeotropic refrigerant mixture having flowed through expansion valve 4A into receiver 5 is separated into a non-azeotropic refrigerant mixture in a liquid state and a non-azeotropic refrigerant mixture in a gas state and then stored in receiver 5. When expansion valve 4C is opened, the non-azeotropic refrigerant mixture in a gas state inside receiver 5 is guided to flow path FP1.

A node N1 serves as a node through which the non-azeotropic refrigerant mixture flowing between compressor 1 and four-way valve 2 passes. A node N2 serves as a node through which the non-azeotropic refrigerant mixture flowing between heat exchanger 6 and expansion valve 4A passes. Three-way valve 8 and flow path FP2 communicate with three-way valve 8 at node N2. A node N3 serves as a node through which the non-azeotropic refrigerant mixture flowing between expansion valve 4A and receiver 5 passes.

A node N4 serves as a node through which the non-azeotropic refrigerant mixture flowing between receiver 5 and expansion valve 4B passes. A node N5 serves as a node through which the non-azeotropic refrigerant mixture flowing between expansion valve 4B and heat exchanger 3 passes. Flow path FP1 communicate with three-way valve 8 at node N5. A node N6 serves as a node through which the non-azeotropic refrigerant mixture flowing between four-way valve 2 and internal heat exchanger 7 passes. A node N7 serves as a node through which the non-azeotropic refrigerant mixture flowing between internal heat exchanger 7 and receiver 5 passes. A node N8 serves as a node through which the refrigerant flowing between receiver 5 and compressor 1 passes.

A node N9 serves as a node through which the non-azeotropic refrigerant mixture flowing between receiver 5 and internal heat exchanger 7 passes. A node N10 serves as a node through which the non-azeotropic refrigerant mixture flowing between internal heat exchanger 7 and expansion valve 4C passes. A node N11 serves as a node through which the non-azeotropic refrigerant mixture flowing between three-way valve 8 and flow path FP1 passes. A node N12 serves as a node through which the non-azeotropic refrigerant mixture flowing between three-way valve 8 and flow path FP2 passes.

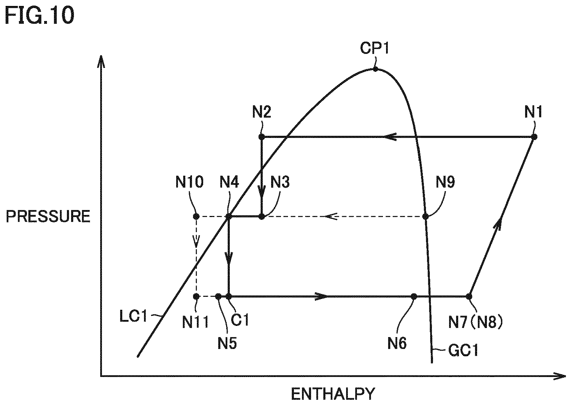

Fig. 10 is a P-h diagram showing a change of the state of the non-azeotropic refrigerant mixture in the cooling operation. The states shown in Fig. 10 correspond to the respective states of the non-azeotropic refrigerant mixture at nodes N1 to N11 in Fig. 9. A state C1 shows the state of the non-azeotropic refrigerant mixture that flows between expansion valve 4B and node N5.

Referring to both Figs. 9 and 10, the process from the state at node N8 to the state at node N1 shows the adiabatic compression process by compressor 1. The temperature of the non-azeotropic refrigerant mixture in the state at node N1 is measured as discharge temperature Td by temperature sensor 13. The process from the state at node N1 to the state at node N2 shows the condensation process by heat exchanger 6. The process from the state at node N2 to the state at node N3 shows the decompression process by expansion valve 4A. The state at node N4 shows the state of the saturated liquid that flows out of receiver 5 and is represented on a saturated liquid line in Fig. 10. The temperature of the non-azeotropic refrigerant mixture in the state at node N4 is measured as temperature T92 by temperature sensor 9B. The process from the state at node N4 to state C1 shows the decompression process by expansion valve 4B.

The state at node N9 shows the state of the saturated vapor that flows out of receiver 5 and is represented on a saturated vapor line in Fig. 10. The temperature of the non-azeotropic refrigerant mixture in the state at node N9 is measured as temperature T91 (> T92) by temperature sensor 9A. The process from the state at node N9 to the state at node N10 shows the cooling process by internal heat exchanger 7. The temperature of the non-azeotropic refrigerant mixture in the state at node N10 is measured as temperature T93 (< T92) by temperature sensor 9C. The process from the state at node N10 to the state at node N11 shows the decompression process by expansion valve 4C. The enthalpy in the state at node N11 is smaller than the enthalpy in state C1. Thus, the enthalpy in the state at node N5 at which the non-azeotropic refrigerant mixture in the state at node N11 joins the non-azeotropic refrigerant mixture in state C1 is greater than the enthalpy at node N11 and less than the enthalpy in state C1.

The process from the state at node N5 to the state at node N6 shows the evaporation process by heat exchanger 3. In the process from the state at node N6 to the state at node N7, the non-azeotropic refrigerant mixture that passes through internal heat exchanger 7 absorbs heat from the non-azeotropic refrigerant mixture in the state at node N9. Thus, the enthalpy in the state at node N7 is greater than the enthalpy in the state at node N6.

In refrigeration cycle apparatus 100, the enthalpy of the non-azeotropic refrigerant mixture that flows into heat exchanger 3 functioning as an evaporator in the cooling operation (the enthalpy in the state at node N5) is reduced by internal heat exchanger 7 below the enthalpy of the non-azeotropic refrigerant mixture that flows out through expansion valve 4B (the enthalpy in state C1). Furthermore, the enthalpy of the non-azeotropic refrigerant mixture suctioned by compressor 1 (the enthalpy in the state at node N8) is increased by internal heat exchanger 7 above the enthalpy of the non-azeotropic refrigerant mixture that flows out of heat exchanger 3 (the enthalpy in the state at node N6). This increases the difference between the enthalpy of the non-azeotropic refrigerant mixture flowing into heat exchanger 3 and the enthalpy of the non-azeotropic refrigerant mixture suctioned by compressor 1. As a result, the cooling operation efficiency of refrigeration cycle apparatus 100 can be improved.

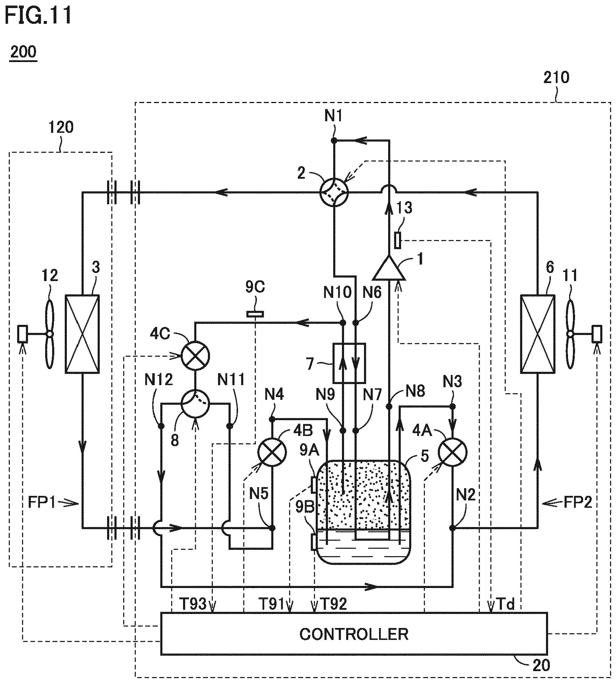

Fig. 11 is a functional block diagram showing a configuration of refrigeration cycle apparatus 200 according to the second embodiment together with a flow of the refrigerant in the heating operation. The heating operation of refrigeration cycle apparatus 200 is also started in the state where expansion valve 4C is closed. In the heating operation, controller 20 allows communication between the discharge port of compressor 1 and heat exchanger 3 and also allows communication between heat exchanger 6 and internal heat exchanger 7. Controller 20 controls three-way valve 8 to allow expansion valve 4C to communicate with flow path FP2.

In the heating operation, the non-azeotropic refrigerant mixture circulates through compressor 1, four-way valve 2, heat exchanger 3, expansion valve 4B, receiver 5, expansion valve 4A, heat exchanger 6, four-way valve 2, internal heat exchanger 7, and receiver 5 in this order. A part of the non-azeotropic refrigerant mixture having flowed through expansion valve 4B into receiver 5 is separated into a non-azeotropic refrigerant mixture in a liquid state and a non-azeotropic refrigerant mixture in a gas state, and then, stored in receiver 5.

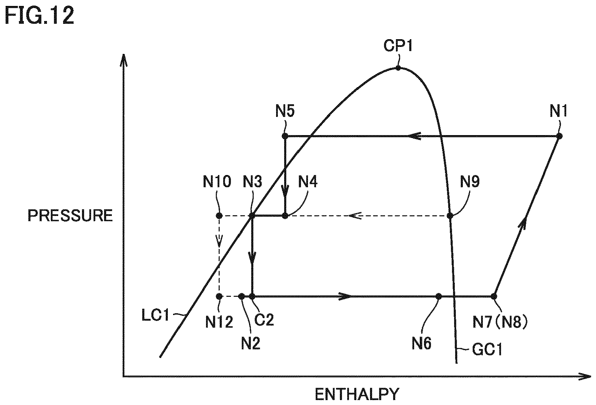

Fig. 12 is a P-h diagram showing a change of the state of the non-azeotropic refrigerant mixture in the heating operation. The states shown in Fig. 12 correspond to the respective states of the non-azeotropic refrigerant mixture at nodes N1 to N10, and N12 in Fig. 11. A state C2 shows the state of the non-azeotropic refrigerant mixture that flows between expansion valve 4A and node N2.

Referring to both Figs. 11 and 12, the process from the state at node N8 to the state at node N1 shows the adiabatic compression process by compressor 1. The temperature of the non-azeotropic refrigerant mixture in the state at node N1 is measured as discharge temperature Td by temperature sensor 13. The process from the state at node N1 to the state at node N5 shows the condensation process by heat exchanger 3. The process from the state at node N5 to the state at node N4 shows the decompression process by expansion valve 4B. The state at node N3 shows the state of the saturated liquid that flows out of receiver 5 and is represented on a saturated liquid line in Fig. 12. The temperature of the non-azeotropic refrigerant mixture in the state at node N3 is measured as temperature T92 by temperature sensor 9B. The process from the state at node N3 to state C2 shows the decompression process by expansion valve 4A.

The state at node N9 shows the state of the saturated vapor that flows out of receiver 5 and is represented on a saturated vapor line in Fig. 12. The temperature of the non-azeotropic refrigerant mixture in the state at node N9 is measured as temperature T91 (> T92) by temperature sensor 9A. The process from the state at node N9 to the state at node N10 shows the cooling process by internal heat exchanger 7. The temperature of the non-azeotropic refrigerant mixture in the state at node N10 is measured as temperature T93 (< T92) by temperature sensor 9C. The process from the state at node N10 to node N12 shows the decompression process by expansion valve 4C. The enthalpy in the state at node N12 is less than the enthalpy in state C2. Thus, the enthalpy in the state at node N2 at which the non-azeotropic refrigerant mixture in the state at node N12 joins the non-azeotropic refrigerant mixture in state C2 is greater than the enthalpy at node N12 and less than the enthalpy in state C2.

The process from the state at node N2 to the state at node N6 shows the evaporation process by heat exchanger 6. In the process from the state at node N6 to the state at node N7, the non-azeotropic refrigerant mixture absorbs heat from the non-azeotropic refrigerant mixture in the state at node N9 in internal heat exchanger 7. Accordingly, the enthalpy in the state at node N7 is greater than the enthalpy in the state at node N6.

In refrigeration cycle apparatus 100, the enthalpy of the non-azeotropic refrigerant mixture that flows into heat exchanger 6 functioning as an evaporator in the heating operation (the enthalpy in the state at node N2) is reduced by internal heat exchanger 7 below the enthalpy of the non-azeotropic refrigerant mixture that flows out through expansion valve 4A (the enthalpy in state C2). Furthermore, the enthalpy of the non-azeotropic refrigerant mixture suctioned by compressor 1 (the enthalpy in the state at node N8) is increased by internal heat exchanger 7 above the enthalpy of the non-azeotropic refrigerant mixture that flows out of heat exchanger 6 (the enthalpy in the state at node N6). This increases the difference between the enthalpy of the non-azeotropic refrigerant mixture flowing into heat exchanger 6 and the enthalpy of the non-azeotropic refrigerant mixture suctioned by compressor 1. As a result, the heating operation efficiency of refrigeration cycle apparatus 100 can be improved.

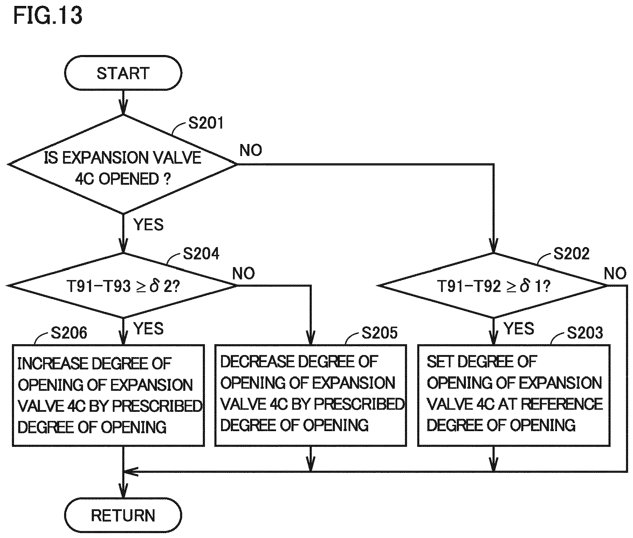

Fig. 13 is an example of a flowchart for illustrating control of expansion valve 4C performed by controller 20 in Figs. 9 and 11. The process shown in Fig. 13 is invoked at prescribed time intervals by a main routine (not shown) for performing integrated control of refrigeration cycle apparatus 200. The process shown in Fig. 13 is performed in the cooling operation and the heating operation.

As shown in Fig. 13, in S201, controller 20 determines whether expansion valve 4C is opened or not. When expansion valve 4C is closed (NO in S201), controller 20 proceeds the process to S202. In S202, controller 20 determines whether or not the difference (the temperature gradient) between temperatures T91 and T92 is equal to or greater than a threshold value δ1 (the first threshold value). When the temperature gradient is less than threshold value δ1 (NO in S202), controller 20 returns the process to the main routine. When the temperature gradient is equal to or greater than threshold value δ1 (YES in S202), controller 20 proceeds the process to S203. In S203, controller 20 opens expansion valve 4C by a reference degree of opening, and then, returns the process to the main routine.

When expansion valve 4C is opened (YES in S201), controller 20 proceeds the process to S204. In S204, controller 20 determines whether or not the difference between temperatures T91 and T93 is equal to or greater than a threshold value δ2. When the difference between temperatures T91 and T93 is less than threshold value δ2 (NO in S204), controller 20 proceeds the process to S205. In S205, controller 20 decreases the degree of opening of expansion valve 4C by a prescribed degree of opening, and then, returns the process to the main routine. When the difference between temperatures T91 and T93 is equal to or greater than threshold value δ2 (YES in S204), controller 20 proceeds the process to S206. In S206, controller 20 increases the degree of opening of expansion valve 4C by a prescribed degree of opening, and then, returns the process to the main routine.

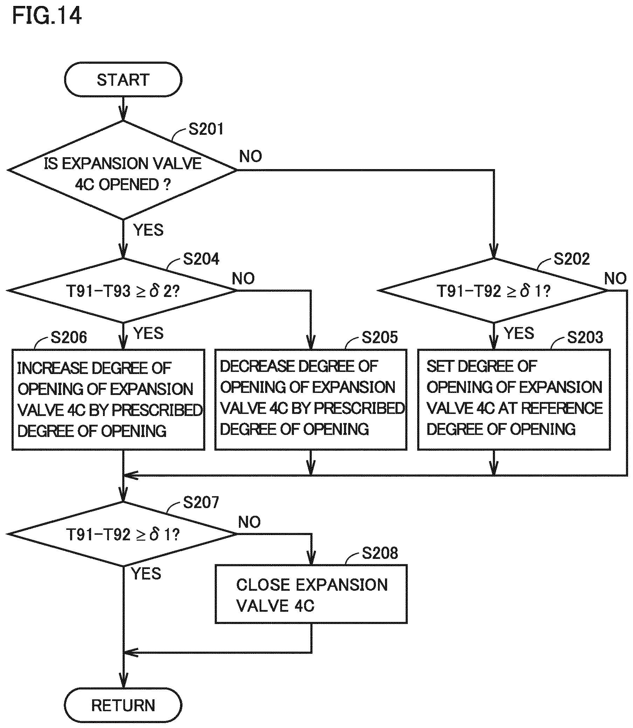

Fig. 14 is another example of the flowchart for illustrating control of expansion valve 4C performed by controller 20 in Figs. 9 and 11. The flowchart shown in Fig. 14 is the same as the flowchart shown in Fig. 13 additionally including S207 and S208. Since S201 to S206 in Fig. 14 are the same as those in Fig. 13, the description thereof will not be repeated.

As shown in Fig. 14, after S203, S205, or S206, controller 20 determines in S207 whether or not the temperature gradient is equal to or greater than threshold value δ1. When the temperature gradient is less than threshold value δ1 (NO in S207), controller 20 proceeds the process to S208. In S208, controller 20 closes expansion valve 4C, and then, returns the process to the main routine. When the temperature gradient is equal to or greater than threshold value δ1 (YES in S207), controller 20 returns the process to the main routine. When the process shown in Fig. 14 is performed, expansion valve 4C does not need to be closed at the start of the cooling operation and the heating operation.

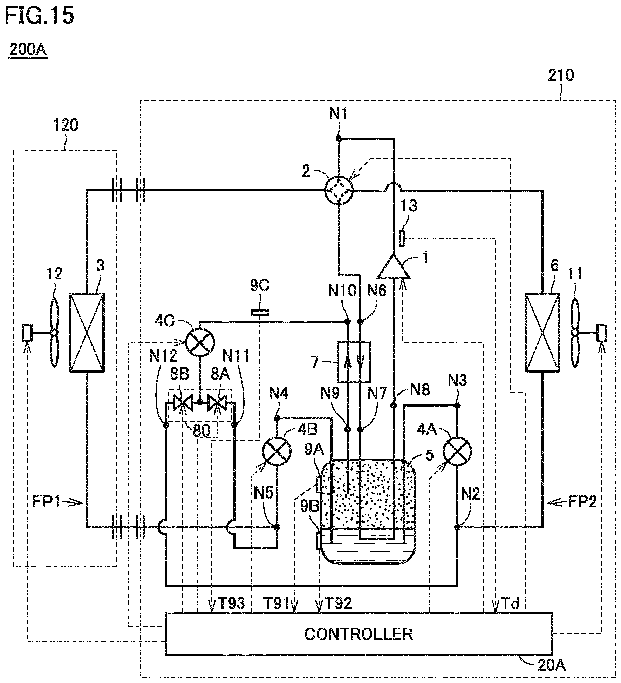

The second embodiment has been described with regard to the case where a three-way valve is used as a flow path switching portion. The flow path switching portion is not limited to a three-way valve but may have any configuration as long as it can switch the flow path through which the non-azeotropic refrigerant mixture in a gas state flows from the refrigerant container. The flow path switching portion may include two on-off valves, for example, as in a refrigeration cycle apparatus 200A according to the first modification of the second embodiment shown in Fig. 15. Refrigeration cycle apparatus 200A has the same configuration as that of refrigeration cycle apparatus 200 in Fig. 9 except that three-way valve 8 and controller 20 of refrigeration cycle apparatus 200 in Fig. 9 are replaced with flow path switching portion 80 and controller 20A, respectively. Since the configuration other than the above is the same, the description thereof will not be repeated.

As shown in Fig. 15, flow path switching portion 80 includes on-off valves 8A and 8B. On-off valve 8A is connected between expansion valve 4C and node N5. On-off valve 8B is connected between expansion valve 4C and node N2. In the cooling operation, controller 20A opens on-off valve 8A and closes on-off valve 8B. In the heating operation, controller 20A closes on-off valve 8A and opens on-off valve 8B.

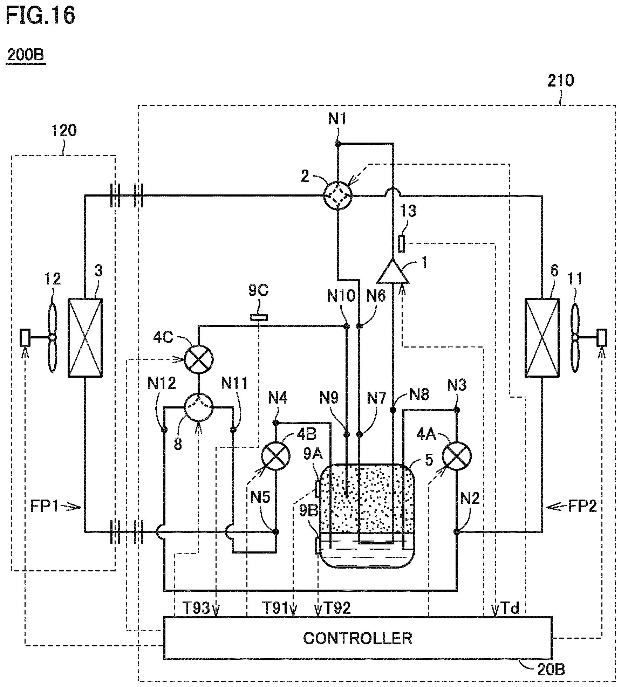

The second embodiment has been described with regard to the refrigeration cycle apparatus including the third heat exchanger that performs heat exchange between the non-azeotropic refrigerant mixture in a gas state from the refrigerant container and the non-azeotropic refrigerant mixture from the heat exchanger functioning as an evaporator. The refrigeration cycle apparatus according to the second embodiment does not need to include the third heat exchanger as in a refrigeration cycle apparatus 200B according to the second modification of the second embodiment shown in Fig. 16. Refrigeration cycle apparatus 200B has the same configuration as that of refrigeration cycle apparatus 200 in Fig. 9 except that internal heat exchanger 7 is removed from refrigeration cycle apparatus 200 in Fig. 9 and controller 20 is replaced with controller 20B. Since the configuration other than the above is the same, the description thereof will not be repeated.

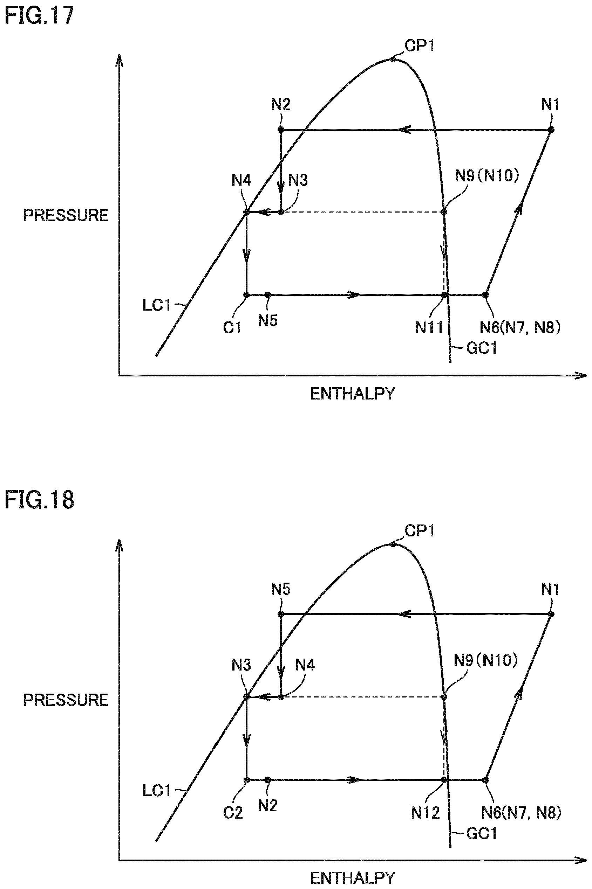

Fig. 17 is a P-h diagram showing a change of the state of the non-azeotropic refrigerant mixture in the cooling operation. The states shown in Fig. 17 correspond to the respective states of the non-azeotropic refrigerant mixture at nodes N1 to N11 in Fig. 16. Since the states other than the state at node N5, the state at node N6, and the state at node N11 are the same as those in Fig. 10, the description thereof will not be repeated.

Referring to both Figs. 16 and 17, in refrigeration cycle apparatus 200B, heat exchange is not performed between the non-azeotropic refrigerant mixture flowing from node N6 to node N7 and the non-azeotropic refrigerant mixture flowing from node N9 to node N10. Thus, the state at node N6 is almost the same as the state at node N7. The process from the state at node N10 to the state at node N11 shows the decompression process by expansion valve 4C. The enthalpy in the state at node N11 is greater than the enthalpy in state C1. Thus, the enthalpy in the state at node N5 at which the non-azeotropic refrigerant mixture in the state at node N11 joins the non-azeotropic refrigerant mixture in state C1 is less than the enthalpy at node N11 and greater than the enthalpy in state C1.

Fig. 18 is a P-h diagram showing a change of the state of the non-azeotropic refrigerant mixture in the heating operation. The states shown in Fig. 18 correspond to the respective states of the non-azeotropic refrigerant mixture at nodes N1 to N10, and N12 in Fig. 16. Since the states other than the state at node N2, the state at node N6, and the state at node N12 are the same as those in Fig. 12, the description thereof will not be repeated.

Referring to both Figs. 16 and 18, the state at node N6 is almost the same as the state at node N7 as in the cooling operation. The process from the state at node N10 to the state at node N12 shows the decompression process by expansion valve 4C. The enthalpy in the state at node N12 is greater than the enthalpy in state C2. Thus, the enthalpy in the state at node N2 at which the non-azeotropic refrigerant mixture in the state at node N12 joins the non-azeotropic refrigerant mixture in state C2 is less than the enthalpy at node N12 and greater than the enthalpy in state C2.

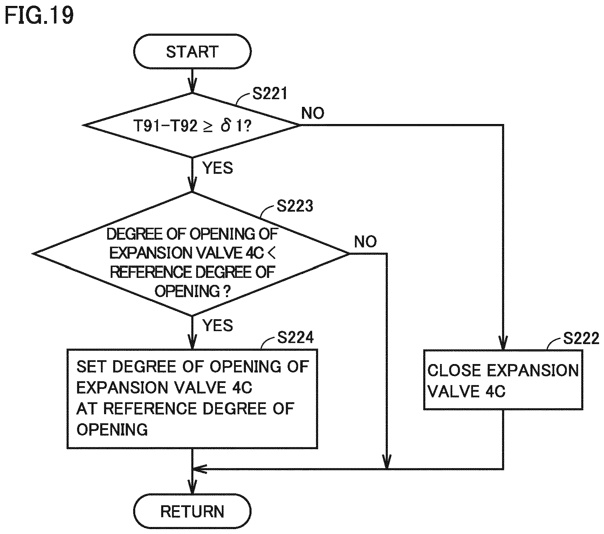

Fig. 19 is a flowchart for illustrating control of expansion valve 4C performed by controller 20B in Fig. 16. The process shown in Fig. 19 is invoked at prescribed time intervals by a main routine (not shown) for performing integrated control of refrigeration cycle apparatus 200B.

As shown in Fig. 19, in S221, controller 20B determines whether or not the temperature gradient is equal to or greater than threshold value δ1. When the temperature gradient is less than threshold value δ1 (NO in S221), controller 20 proceeds the process to S222. In S222, controller 20 closes expansion valve 4C, and then, returns the process to the main routine. When the temperature gradient is equal to or greater than threshold value δ1 (YES in S221), controller 20B proceeds the process to S223.

In S223, controller 20B determines whether or not the degree of opening of expansion valve 4C is less than a reference degree of opening. When the degree of opening of expansion valve 4C is less than the reference degree of opening (YES in S223), controller 20B proceeds the process to S224. In S224, controller 20B sets the degree of opening of expansion valve 4C at the reference degree of opening, and then, returns the process to the main routine. When the degree of opening of expansion valve 4C is equal to or greater than the reference degree of opening (NO in S223), controller 20B returns the process to the main routine.

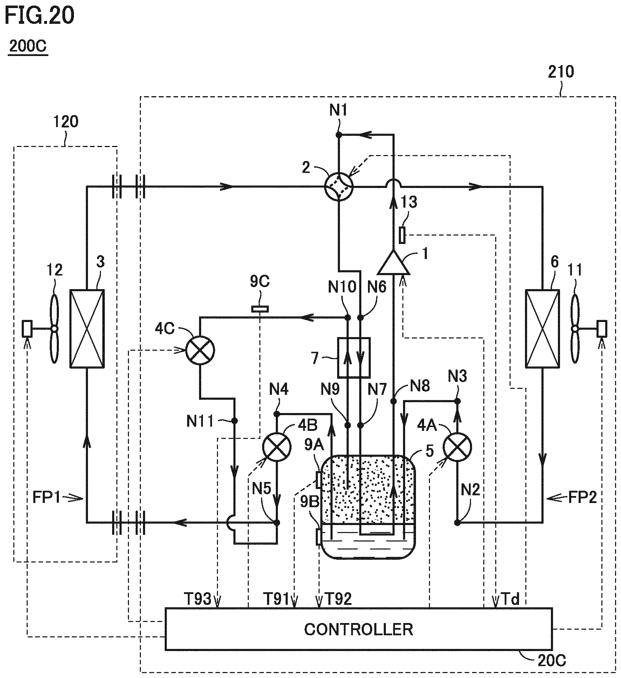

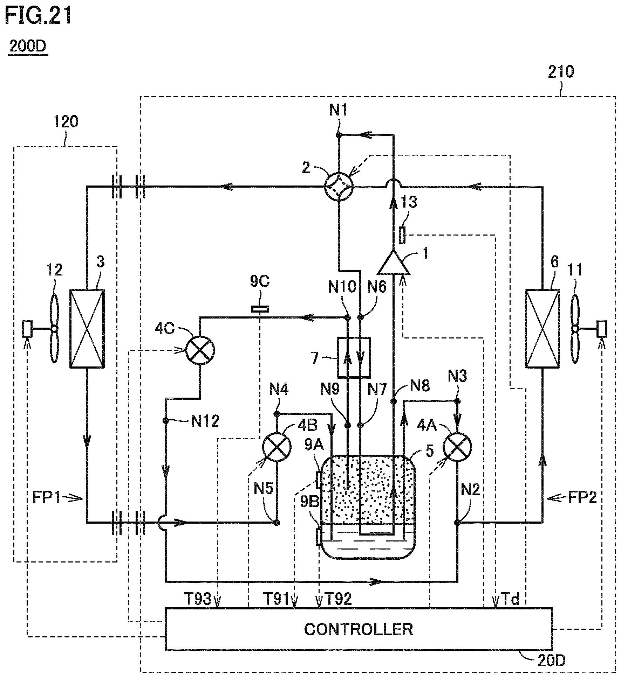

The second embodiment has been described with regard to the refrigeration cycle apparatus including the flow path switching portion that switches the flow path through which the non-azeotropic refrigerant mixture in a gas state flows from the refrigerant container. The refrigeration cycle apparatus according to the second embodiment does not have to include a flow path switching portion, for example, as in a refrigeration cycle apparatus 200C according to the third modification of the second embodiment shown in Fig. 20 or a refrigeration cycle apparatus 200D according to the fourth modification of the second embodiment shown in Fig. 21.

Refrigeration cycle apparatus 200C shown in Fig. 20 has the same configuration as that of refrigeration cycle apparatus 200 in Fig. 9 except that: three-way valve 8 and the flow path that connects three-way valve 8 and flow path FP2 are removed from the configuration of refrigeration cycle apparatus 200 in Fig. 9; and controller 20 is replaced with a controller 20C. Since the configuration other than the above is the same, the description thereof will not be repeated. In the cooling operation, controller 20C performs the process shown in Fig. 13 or 14. Controller 20C performs the heating operation in the state where expansion valve 4C is closed. In the heating operation, controller 20C does not perform the process shown in Fig. 13 or 14.

Refrigeration cycle apparatus 200D shown in Fig. 21 has the same configuration as that of refrigeration cycle apparatus 200 in Fig. 9 except that: three-way valve 8 and the flow path that connects three-way valve 8 and flow path FP1 are removed from the configuration of refrigeration cycle apparatus 200 in Fig. 9; and controller 20 is replaced with a controller 20D. Since the configuration other than the above is the same, the description thereof will not be repeated. In the heating operation, controller 20D performs the process shown in Fig. 13 or 14. Controller 20D performs the cooling operation in the state where expansion valve 4C is closed. In the cooling operation, controller 20D does not perform the process shown in Fig. 13 or 14.

As described above, according to the refrigeration cycle apparatus in each of the second embodiment and the first to fourth modifications, the performance deterioration of the refrigeration cycle apparatus in which a non-azeotropic refrigerant mixture is used can be suppressed while reducing the GWP of the non-azeotropic refrigerant mixture. Furthermore, according to the refrigeration cycle apparatus in each of the second embodiment and the first to fourth modifications, the performance deterioration of the refrigeration cycle apparatus caused by a decrease in the weight ratio of R1123 in the circulating refrigerant can be suppressed.

It is also intended to appropriately combine the embodiments and the modifications thereof disclosed herein for implementation unless contradicted. It should be understood that the embodiments and the modifications disclosed herein are illustrative and non-restrictive in every respect. The scope of the present invention is defined by the terms of the claims, rather than the description above, and is intended to include any modifications within the meaning and scope equivalent to the terms of the claims.

### REFERENCE SIGNS LIST

1 compressor, 2 four-way valve, 3, 6 heat exchanger, 4, 4A to 4C expansion valve, 5 receiver, 7 internal heat exchanger, 8 three-way valve, 8A, 8B on-off valve, 9A to 9C, 13 temperature sensor, 10, 20, 20A to 20D controller, 11 outdoor fan, 12 indoor fan, 80 flow path switching portion, 100, 100A, 100B, 200, 200A to 200D refrigeration cycle apparatus, 110, 210 outdoor unit, 120 indoor unit, FP1, FP2 flow path.

## Claims

1. A refrigeration cycle apparatus (100, 200) in which a non-azeotropic refrigerant mixture is used, the refrigeration cycle apparatus (100, 200) comprising:
a compressor (1);
a first heat exchanger (6);
a first expansion valve (4A); and
a second heat exchanger (3), wherein
the non-azeotropic refrigerant mixture circulates in a first circulation direction through the compressor (1), the first heat exchanger (6), the first expansion valve (4A), and the second heat exchanger (3),
the non-azeotropic refrigerant mixture includes R32, CF3I, and R1123,
a first weight ratio of the R32 in the non-azeotropic refrigerant mixture sealed in the refrigeration cycle apparatus (100, 200) is equal to or less than 43 wt%,
a second weight ratio of the CF3I in the non-azeotropic refrigerant mixture sealed in the refrigeration cycle apparatus (100, 200) is equal to or less than the first weight ratio, and
a third weight ratio of the R1123 in the non-azeotropic refrigerant mixture sealed in the refrigeration cycle apparatus (100, 200) is equal to or greater than 14 wt%.

2. The refrigeration cycle apparatus (100, 200) according to claim 1, wherein the first weight ratio is equal to or less than 30 wt%.

3. The refrigeration cycle apparatus (100) according to claim 1 or 2, further comprising a controller (20), wherein
the non-azeotropic refrigerant mixture discharged from the compressor (1) has a first temperature, and
the controller (20) is configured to control the compressor (1) such that a driving frequency of the compressor (1) is lower when the first temperature is higher than a reference temperature than when the first temperature is lower than the reference temperature.

4. The refrigeration cycle apparatus (100) according to claim 1 or 2, further comprising:
a controller (20); and
a blower (11) configured to blow air to the first heat exchanger (6), wherein
the non-azeotropic refrigerant mixture discharged from the compressor (1) has a first temperature, and
the controller (20) is configured to control the blower (11) such that an amount of air blown from the blower (11) per unit time is greater when the first temperature is higher than a reference temperature than when the first temperature is lower than the reference temperature.

5. The refrigeration cycle apparatus (100) according to claim 1 or 2, further comprising a controller (20), wherein
the non-azeotropic refrigerant mixture discharged from the compressor (1) has a first temperature, and
the controller (20) is configured to control the first expansion valve (4A) such that a degree of opening of the first expansion valve (4A) is greater when the first temperature is higher than a reference temperature than when the first temperature is lower than the reference temperature.

6. The refrigeration cycle apparatus (200) according to any one of claims 3 to 5, further comprising:
a second expansion valve (4B) connected to the second heat exchanger (3) through a first flow path (FP1);
a third expansion valve (4C) communicating with the first flow path (FP1); and
a refrigerant container (5) communicating with the first expansion valve (4A), the second expansion valve (4B), and the third expansion valve (4C), wherein the refrigeration cycle apparatus is configured such that,
when the third expansion valve (4C) is opened, the non-azeotropic refrigerant mixture in a gas state inside the refrigerant container (5) is guided to the first flow path (FP1).

7. The refrigeration cycle apparatus (200) according to claim 6, wherein the refrigeration cycle apparatus is configured such that,
at least a part of the non-azeotropic refrigerant mixture that flows through the first expansion valve (4A) into the refrigerant container (5) evaporates inside the refrigerant container (5), and
the controller (20) is configured to open the third expansion valve (4C) when a first difference between a second temperature of the non-azeotropic refrigerant mixture in a gas state inside the refrigerant container (5) and a third temperature of the non-azeotropic refrigerant mixture in a liquid state inside the refrigerant container (5) is greater than a first threshold value.

8. The refrigeration cycle apparatus (200) according to claim 7, further comprising a third heat exchanger (7) that is connected between the refrigerant container (5) and the third expansion valve (4C), and connected between the second heat exchanger (3) and the refrigerant container (5), wherein
the third heat exchanger (7) is configured to perform heat exchange between the non-azeotropic refrigerant mixture in a gas state that flows out of the refrigerant container (5) and the non-azeotropic refrigerant mixture suctioned by the compressor (1).

9. The refrigeration cycle apparatus (200) according to claim 8, wherein
the controller (20) is configured to
increase a degree of opening of the third expansion valve (4C) when a second difference between the second temperature and a fourth temperature of the non-azeotropic refrigerant mixture flowing between the refrigerant container (5) and the third expansion valve (4C) is greater than a second threshold value, and
decrease the degree of opening of the third expansion valve (4C) when the second difference is less than the second threshold value.

10. The refrigeration cycle apparatus (200) according to any one of claims 7 to 9, wherein
the controller (20) is configured to close the third expansion valve (4C) when the first difference is less than the first threshold value.

11. The refrigeration cycle apparatus (200) according to any one of claims 6 to 10, further comprising:
a flow path switching valve (2) configured to switch a circulation direction of the non-azeotropic refrigerant mixture between the first circulation direction and a second circulation direction opposite to the first circulation direction; and
a flow path switching portion (8) configured to allow the third expansion valve (4C) to communicate with the first flow path (FP1) or a second flow path (FP2), the second flow path (FP2) connecting the first expansion valve (4A) and the first heat exchanger (6), wherein
the flow path switching portion (8) is configured to allow
communication between the third expansion valve (4C) and the first flow path (FP1) in the first circulation direction, and
communication between the third expansion valve (4C) and the second flow path (FP2) in the second circulation direction.

## Patentansprüche

1. Kältekreislaufvorrichtung (100, 200), in der ein nicht-azeotropes Kältemittelgemisch genutzt wird, wobei die Kältekreislaufvorrichtung (100, 200) umfasst:
einen Verdichter (1);
einen ersten Wärmetauscher (6);
ein erstes Expansionsventil (4A); und
einen zweiten Wärmetauscher (3), wobei
das nicht-azeotrope Kältemittelgemisch in einer ersten Zirkulationsrichtung durch den Verdichter (1), den ersten Wärmetauscher (6), das erste Expansionsventil (4A) und den zweiten Wärmetauscher (3) zirkuliert,
das nicht-azeotrope Kältemittelgemisch R32, CF3I und R1123 enthält,
ein erstes Gewichtsverhältnis des R32 in dem nicht-azeotropen Kältemittelgemisch, das in der Kältekreislaufvorrichtung (100, 200) eingeschlossen ist, gleich oder kleiner als 43 Gew.-% ist,
ein zweites Gewichtsverhältnis des CF3I in dem nicht-azeotropen Kältemittelgemisch, das in der Kältekreislaufvorrichtung (100, 200) eingeschlossen ist, gleich wie oder kleiner als das erste Gewichtsverhältnis ist, und
ein drittes Gewichtsverhältnis des R1123 in dem nicht-azeotropen Kältemittelgemisch, das in der Kältekreislaufvorrichtung (100, 200) eingeschlossen ist, gleich oder größer als 14 Gew.-% ist.

2. Kältekreislaufvorrichtung (100, 200) nach Anspruch 1, wobei das erste Gewichtsverhältnis gleich oder kleiner als 30 Gew.-% ist.

3. Kältekreislaufvorrichtung (100) nach Anspruch 1 oder 2, ferner umfassend eine Steuereinheit (20), wobei
das nicht-azeotrope Kältemittelgemisch, das aus dem Verdichter (1) abgegeben wird, eine erste Temperatur aufweist, und
die Steuereinheit (20) eingerichtet ist, den Verdichter (1) so zu steuern, dass eine Antriebsfrequenz des Verdichters (1) niedriger ist, wenn die erste Temperatur höher als eine Referenztemperatur ist, als wenn die erste Temperatur niedriger als die Referenztemperatur ist.

4. Kältekreislaufvorrichtung (100) nach Anspruch 1 oder 2, ferner umfassend:
eine Steuereinheit (20); und
ein Gebläse (11), das eingerichtet ist, Luft zu dem ersten Wärmetauscher (6) zu blasen, wobei
das nicht-azeotrope Kältemittelgemisch, das aus dem Verdichter (1) abgegeben wird, eine erste Temperatur aufweist, und
die Steuereinheit (20) eingerichtet ist, das Gebläse (11) so zu steuern, dass eine Menge von pro Zeiteinheit aus dem Gebläse (11) geblasener Luft größer ist, wenn die erste Temperatur höher als eine Referenztemperatur ist, als wenn die erste Temperatur niedriger als die Referenztemperatur ist.

5. Kältekreislaufvorrichtung (100) nach Anspruch 1 oder 2, ferner umfassend eine Steuereinheit (20), wobei
das nicht-azeotrope Kältemittelgemisch, das aus dem Verdichter (1) abgegeben wird, eine erste Temperatur aufweist, und
die Steuereinheit (20) eingerichtet ist, das erste Expansionsventil (4A) so zu steuern, dass ein Öffnungsgrad des ersten Expansionsventils (4A) größer ist, wenn die erste Temperatur höher als eine Referenztemperatur ist, als wenn die erste Temperatur niedriger als die Referenztemperatur ist.

6. Kältekreislaufvorrichtung (200) nach einem der Ansprüche 3 bis 5, ferner umfassend:
ein zweites Expansionsventil (4B), das mit dem zweiten Wärmetauscher (3) durch einen ersten Strömungsweg (FP1) verbunden ist;
ein drittes Expansionsventil (4C), das mit dem ersten Strömungsweg (FP1) kommuniziert; und
einen Kältemittelbehälter (5), der mit dem ersten Expansionsventil (4A), dem zweiten Expansionsventil (4B) und dem dritten Expansionsventil (4C) kommuniziert, wobei die Kältemittelkreislaufvorrichtung so eingerichtet ist, dass
wenn das dritte Expansionsventil (4C) geöffnet ist, das nicht-azeotrope Kältemittelgemisch in einem gasförmigen Zustand innerhalb des Kältemittelbehälters (5) in den ersten Strömungsweg (FP1) geleitet wird.

7. Kältekreislaufvorrichtung (200) nach Anspruch 6, wobei die Kältekreislaufvorrichtung so eingerichtet ist, dass
zumindest ein Teil des nicht-azeotropen Kältemittelgemisches, das durch das erste Expansionsventil (4A) in den Kältemittelbehälter (5) strömt, innerhalb des Kältemittelbehälters (5) verdampft, und
die Steuereinheit (20) eingerichtet ist, das dritte Expansionsventil (4C) zu öffnen, wenn eine erste Differenz zwischen einer zweiten Temperatur des nicht-azeotropen Kältemittelgemischs in einem gasförmigen Zustand innerhalb des Kältemittelbehälters (5) und einer dritten Temperatur des nicht-azeotropen Kältemittelgemischs in einem flüssigen Zustand innerhalb des Kältemittelbehälters (5) größer als ein erster Schwellenwert ist.

8. Kältekreislaufvorrichtung (200) nach Anspruch 7, weiterhin umfassend einen dritten Wärmetauscher (7), der zwischen dem Kältemittelbehälter (5) und dem dritten Expansionsventil (4C) verbunden ist, und zwischen dem zweiten Wärmetauscher (3) und dem Kältemittelbehälter (5) verbunden ist, wobei
der dritte Wärmetauscher (7) eingerichtet ist, Wärmetausch zwischen dem nicht-azeotropen Kältemittelgemisch in einem gasförmigen Zustand, das aus dem Kältemittelbehälter (5) strömt, und dem vom Verdichter (1) angesaugten nicht azeotropen Kältemittelgemisch durchzuführen.

9. Kältekreislaufvorrichtung (200) nach Anspruch 8, wobei
die Steuereinheit (20) eingerichtet ist zum:
Erhöhen eines Öffnungsgrades des dritten Expansionsventils (4C), wenn eine zweite Differenz zwischen der zweiten Temperatur und einer vierten Temperatur des nicht-azeotropen Kältemittelgemisches, das zwischen dem Kältemittelbehälter (5) und dem dritten Expansionsventil (4C) strömt, größer ist als ein zweiter Schwellenwert, und
Verringern des Öffnungsgrades des dritten Expansionsventils (4C), wenn die zweite Differenz kleiner als der zweite Schwellenwert ist.

10. Kältekreislaufvorrichtung (200) nach einem der Ansprüche 7 bis 9, wobei
die Steuereinheit (20) eingerichtet ist, das dritte Expansionsventil (4C) zu schließen, wenn die erste Differenz kleiner ist als der erste Schwellenwert.

11. Kältekreislaufvorrichtung (200) nach einem der Ansprüche 6 bis 10, weiter umfassend:
ein Strömungsweg-Schaltventil (2), das eingerichtet ist, eine Zirkulationsrichtung des nicht-azeotropen Kältemittelgemischs zwischen der ersten Zirkulationsrichtung und einer zweiten Zirkulationsrichtung entgegengesetzt zur ersten Zirkulationsrichtung zu schalten; und
einen Strömungsweg-Schaltabschnitt (8), der eingerichtet ist, dem dritten Expansionsventil (4C) zu erlauben, mit dem ersten Strömungsweg (FP1) oder einem zweiten Strömungsweg (FP2) zu kommunizieren, wobei der zweite Strömungsweg (FP2) das erste Expansionsventil (4A) und den ersten Wärmetauscher (6) verbindet, wobei
der Strömungsweg-Schaltabschnitt (8) eingerichtet ist zum Ermöglichen von
einer Kommunikation zwischen dem dritten Expansionsventil (4C) und dem ersten Strömungsweg (FP1) in der ersten Zirkulationsrichtung, und
einer Kommunikation zwischen dem dritten Expansionsventil (4C) und dem zweiten Strömungsweg (FP2) in der zweiten Zirkulationsrichtung.

## Revendications

1. Appareil à cycle de réfrigération (100, 200) dans lequel un mélange réfrigérant non azéotropique est utilisé, l'appareil à cycle de réfrigération (100, 200) comprenant :
un compresseur (1) ;
un premier échangeur de chaleur (6) ;
un premier détendeur (4A) ; et
un deuxième échangeur de chaleur (3), dans lequel
le mélange réfrigérant non azéotropique circule dans un premier sens de circulation à travers le compresseur (1), le premier échangeur de chaleur (6), le premier détendeur (4A) et le second échangeur de chaleur (3),
le mélange réfrigérant non azéotropique comprend du R32, du CF3I et du RI1123,
un premier rapport de poids du R32 dans le mélange réfrigérant non azéotropique scellé dans l'appareil à cycle de réfrigération (100, 200) est égal ou inférieur à 43 % en poids,
un deuxième rapport de poids du CF3I dans le mélange réfrigérant non azéotropique scellé dans l'appareil à cycle de réfrigération (100, 200) est égal ou inférieur au premier rapport de poids, et
un troisième rapport de poids du R1123 dans le mélange réfrigérant non azéotropique scellé dans l'appareil à cycle de réfrigération (100, 200) est égal ou inférieur à 14 % en poids.

2. Appareil à cycle de réfrigération (100, 200) selon la revendication 1, dans lequel le premier rapport de poids est égal ou inférieur à 30 % en poids.

3. Appareil à cycle de réfrigération (100) selon la revendication 1 ou 2, comprenant en outre un dispositif de commande (20), dans lequel
le mélange réfrigérant non azéotropique déchargé du compresseur (1) présente une première température, et
le dispositif de commande (20) est configuré pour commander le compresseur (1) de sorte qu'une fréquence de commande du compresseur (1) soit plus faible lorsque la première température est supérieure à une température de référence que lorsque la première température est inférieure à la température de référence.

4. Appareil à cycle de réfrigération (100) selon la revendication 1 ou 2, comprenant en outre :
un dispositif de commande (20) ; et
une soufflerie (11) conçue pour souffler de l'air au premier échangeur de chaleur (6), dans lequel
le mélange réfrigérant non azéotropique déchargé du compresseur (1) présente une première température, et
le dispositif de commande (20) est configuré pour commander la soufflerie (11) de manière à ce que la quantité d'air soufflé par la soufflerie (11) par unité de temps soit plus importante lorsque la première température est supérieure à une température de référence que lorsque la première température est inférieure à la température de référence.

5. Appareil à cycle de réfrigération (100) selon la revendication 1 ou 2, comprenant en outre un dispositif de commande (20), dans lequel
le mélange réfrigérant non azéotropique déchargé du compresseur (1) présente une première température, et
le dispositif de commande (20) est configuré pour commander le premier détendeur (4A) de manière à ce que le degré d'ouverture du premier détendeur (4A) soit plus élevé lorsque la première température est supérieure à une température de référence que lorsque la première température est inférieure à la température de référence.

6. Appareil à cycle de réfrigération (200) selon l'une quelconque des revendications 3 à 5, comprenant en outre :
un deuxième détendeur (4B) relié au deuxième échangeur de chaleur (3) par un premier chemin d'écoulement (FP1) ;
un troisième détendeur (4C) communiquant avec le premier chemin d'écoulement (FP1) ; et
un réservoir de réfrigérant (5) communiquant avec le premier détendeur (4A), le deuxième détendeur (4B), et le troisième détendeur (4C), dans lequel l'appareil à cycle de réfrigération est configuré de telle sorte que,
lorsque le troisième détendeur (4C) est ouvert, le mélange réfrigérant non azéotropique à l'état gazeux à l'intérieur du réservoir de réfrigérant (5) est guidé vers le premier chemin d'écoulement (FP1).

7. Appareil à cycle de réfrigération (200) selon la revendication 6, dans lequel l'appareil à cycle de réfrigération est configuré de telle sorte que,
au moins une partie du mélange réfrigérant non azéotropique qui s'écoule à travers le premier détendeur (4A) dans le réservoir de réfrigérant (5) s'évapore à l'intérieur du réservoir de réfrigérant (5), et
le dispositif de commande (20) est configuré pour ouvrir le troisième détendeur (4C) lorsqu'une première différence entre une deuxième température du mélange réfrigérant non azéotropique à l'état gazeux à l'intérieur du réservoir de réfrigérant (5) et une troisième température du mélange réfrigérant non azéotropique à l'état liquide à l'intérieur du réservoir de réfrigérant (5) est supérieure à une première valeur seuil.

8. Appareil à cycle de réfrigération (200) selon la revendication 7, comprenant en outre un troisième échangeur de chaleur (7) qui est connecté entre le réservoir de réfrigérant (5) et le troisième détendeur (4C), et connecté entre le deuxième échangeur de chaleur (3) et le réservoir de réfrigérant (5), dans lequel
le troisième échangeur de chaleur (7) est configuré pour effectuer un échange de chaleur entre le mélange réfrigérant non azéotropique à l'état gazeux qui s'écoule du réservoir de réfrigérant (5) et le mélange réfrigérant non azéotropique aspiré par le compresseur (1).

9. Appareil à cycle de réfrigération (200) selon la revendication 8, dans lequel
le dispositif de commande (20) est configuré pour
augmenter le degré d'ouverture du troisième détendeur (4C) lorsqu'une deuxième différence entre la deuxième température et une quatrième température du mélange réfrigérant non azéotropique circulant entre le réservoir de réfrigérant (5) et le troisième détendeur (4C) est supérieure à une deuxième valeur seuil, et
diminuer le degré d'ouverture du troisième détendeur (4C) lorsque la deuxième différence est inférieure à la deuxième valeur seuil.

10. Appareil à cycle de réfrigération (200) selon l'une quelconque des revendications 7 à 9, dans lequel
le dispositif de commande (20) est configuré pour fermer le troisième détendeur (4C) lorsque la première différence est inférieure à la première valeur seuil.

11. Appareil à cycle de réfrigération (200) selon l'une quelconque des revendications 6 à 10, comprenant en outre :
une vanne de commutation du chemin d'écoulement (2) configurée pour commuter un sens de circulation du mélange réfrigérant non azéotropique entre le premier sens de circulation et un second sens de circulation opposé au premier sens de circulation ; et
une partie de commutation de chemin d'écoulement (8) configurée pour permettre au troisième détendeur (4C) de communiquer avec le premier chemin d'écoulement (FP1) ou un second chemin d'écoulement (FP2), le second chemin d'écoulement (FP2) reliant le premier détendeur (4A) et le premier échangeur de chaleur (6), dans lequel
la vanne de commutation du chemin d'écoulement (8) est configurée pour permettre
la communication entre le troisième détendeur (4C) et le premier chemin d'écoulement (FP1) dans la première direction de circulation, et
la communication entre le troisième détendeur (4C) et le second chemin d'écoulement (FP2) dans le second sens de circulation.
